# EUROPÄISCHE PATENTSCHRIFT

(11) **EP 1 286 026 B1**
(45) Veröffentlichungstag und Bekanntmachung des Hinweises auf die Patenterteilung: **28.01.2004**
(21) Anmeldenummer: 02014285.7
(22) Anmeldetag: 01.07.2002
(51) Int. Cl.: F01N 3/08, F01N 7/14, F01N 7/02

(54) **Abgasanlage eines Kraftfahrzeugs**
Exhaust system for a motor vehicle
Système d'échappement d'un véhicule automobile

(30) Priorität: 17.08.2001 DE 10139424
(43) Veröffentlichungstag der Anmeldung: 26.02.2003
(73) Patentinhaber: Benteler Automobiltechnik GmbH, 33102 Paderborn (DE)
(72) Erfinder: Hinder Axel, 33178 Borchen (DE); Dr. Smatloch Christian, 33100 Paderborn (DE); Gross Walter, 32456 Detmold (DE); Kleinschmidt Jürgen, 37688 Beverungen (DE)
(74) Vertreter: Bockermann, Rolf, Dipl.-Ing.

(56) Entgegenhaltungen:
- DE-A- 4 326 243
- DE-A- 19 746 658
- DE-A- 19 854 095
- DE-A- 19 857 509
- US-A- 5 979 159
- US-A1- 2002 078 685

## Beschreibung

Die Erfindung betrifft eine Abgasanlage eines Kraftfahrzeugs zwischen einem Abgas erzeugenden Verbrennungsmotor und einem Abgas in die Umgebung überleitenden Auspuffrohr gemäß den Merkmalen im Oberbegriff des Patentanspruchs 1.

Verbrennungsmotoren, insbesondere direkt einspritzende Ottomotoren, werden zur Erzielung möglichst niedriger Kraftstoffverbrauchswerte im Magerbetrieb gefahren und weisen unterstöchiometrische Betriebspunkte auf. Dies erschwert den derzeit eingesetzten Drei-Wege-Katalysatoren die vollständige Konvertierung der Schadstoffkomponenten Kohlenwasserstoff (HC), Kohlenmonoxid (CO) und Stickoxid (NOₓ) in ungiftige Verbindungen, wie Kohlendioxid (CO₂), Stickoxid (N₂) bzw. Wasser (H₂O).

Ursache hierfür sind die geringen Abgastemperaturen im Testzyklus, höhere HC-Emissionen beim Magermix, vor allem aber die Notwendigkeit zur NOₓ-Reduktion im sauerstoffreichen Abgas.

Um NOₓ-Wirkungsgrade von über 90 % in einem Temperaturbereich von 300 °C bis 500 °C zu erreichen, wird eine spezielle Nachbehandlung des Abgases durchgeführt. Eine solche Abgasnachbehandlung umfasst in der Regel einen motomahen Drei-Wege-Katalysator und einen unter dem Boden des Kraftfahrzeugs angeordneten NOₓ-Adsorber. Hierbei sind jedoch zwei gegensätzliche Anforderungen zu erfüllen. Auf der einen Seite wird eine möglichst kurze Aufheizzeit für den Dreiwegekatalysator (light off time) angestrebt, das heißt, die Arbeitstemperatur von > 350 °C soll in denkbar kurzer Zeit erreicht werden. Auf der anderen Seite soll jedoch die Abgastemperatur 500 °C nicht überschreiten. Dies ist die maximale Temperaturfestigkeit eines NOₓ-Adsorbers.

Die erste Anforderung wird bislang durch luftspaltisolierte Abgasleitungen erreicht. Diese sind zweiwandig ausgeführt und weisen ein dünnwandiges Innenrohr mit einer geringen Wärmespeicherkapazität auf, wodurch eine nur geringe Entnahme von Wärme aus dem Abgas erfolgt und damit eine schnelle Aufheizung gewährleistet ist. Ein Mantelrohr realisiert die Dichtigkeit nach außen und fungiert als tragendes Element.

Die zweite Anforderung konnte bislang noch nicht zufriedenstellend in die Praxis umgesetzt werden. Dies liegt unter anderem daran, dass insbesondere im Hochlast- bzw. Hochgeschwindigkeitsbereich erheblich höhere Temperaturen als 500 °C vor dem NOₓ-Adsorber auftreten. Derzeit behilft sich die Praxis häufig mit relativ langen Abgasleitungen, die ein Abkühlen der Abgase bis zum NOₓ-Adsorber bewirken sollen. Dennoch kann nicht verhindert werden, dass die Lebensdauer der NOₓ-Adsorber aufgrund der hohen Temperaturbelastung vergleichsweise kurz ist.

Man hat zwar bereits durch innermotorische Maßnahmen, z.B. durch Kühlen mittells Kraftstoff, d.h. durch Anfettung des Kraftstoff/Luft-Gemisches versucht, die Temperaturbelastung zu senken. Jedoch wurde hiermit eine Verschlechterung des Gesamtwirkungsgrads in Kauf genommen.

Durch die DE 198 57 509 A1 ist eine Abgasanlage eines Kraftfahrzeugs zwischen einem Abgas erzeugenden Verbrennungsmotor und einem Abgas in die Umgebung überleitenden Auspuffrohr bekannt, welche zwischen einem motomahen Drei-Wege-Katalysator und einem vor dem Auspuffrohr angeordneten NOₓ-Adsorber ein Abgas weiterleitendes, mit einem Sperrorgan versehenes Innenrohr und ein das Innenrohr mit Abstand umgebendes tragendes Mantelrohr aufweist. Der Ringspalt zwischen dem Innenrohr und dem Mantelrohr ist an ein Kühlsystem angeschlossen. Ferner wird der Ringspalt in Längsrichtung von mehreren, umfangsseitig gleichmäßig verteilt angeordneten Rohren durchsetzt, die permanent von Abgas beaufschlagt werden. Diese Rohre entnehmen dem Abgas so viel Energie, dass der Katalysator spät anspringt. Ferner wird der Abgasgegendruck durch diese in den Abgasquerschnitt eingegliederten Rohre erhöht. Die Leistung des Motors wird gemindert. Auch sind die Fertigungskosten sehr hoch, da die einzelnen Rohre dicht stimseitig des Ringspalts gefügt werden müssen.

Der Erfindung liegt - ausgehend vom Stand der Technik - die Aufgabe zugrunde, eine Abgasanlage eines Kraftfahrzeugs mit einem Drei-Wege-Katalysator und einem NOₓ-Adsorber zu schaffen, welche bei geringerem Kraftstoffverbrauch und weniger Emissionen in die Umwelt eine höhere Lebensdauer eines NOₓ-Adsorbers gewährleistet.

Diese Aufgabe wird mit den im kennzeichnenden Teil des Patentanspruchs 1 angegebenen Merkmalen gelöst.

Die Erfindung macht sich hierbei zunächst die bekannte Zweiwandtechnik mit einem Innenrohr und einem Trennrohr zunutze, um durch den isolierenden inneren Ringspalt zwischen dem Innenrohr und dem Trennrohr eine geringe Wärmeabfuhr aus dem Abgas und damit eine schnelle Aufheizung des Drei-Wege-Katalysators zu erzielen. Zusätzlich wird zwischen dem Trennrohr und einem Mantelrohr ein weiterer äußerer Ringspalt gebildet, der von einem Kühlmittel durchströmt wird. Dieses Kühlmittel sorgt dafür, dass nach dem Absperren des Innenrohrs Abgas nur noch durch den inneren Ringspalt strömen kann und dadurch intensiv durch das Kühlmittel gekühlt wird. Das den NOₓ-Adsorber beaufschlagende Abgas wird auf diese Weise wirkungsvoll auf die für den NOₓ-Adsorber notwendige Temperatur gekühlt.

Die Erfindung integriert gleichermaßen die Vorteile einer schnellen Aufheizung des Drei-Wege-Katalysators und die Kühlung des Abgases nach dem Aufheizen. Der Kraftstoffverbrauch wird effizienter bei geringeren Emissionen aus der Abgasanlage. Da der NOₓ-Adsorber nicht mehr hohen Temperaturen ausgesetzt ist, wird seine Lebensdauer deutlich heraufgesetzt. Auf Grund der eindeutigen Funktionstrennung können die verschiedenen Bauteile der Abgasanlage aus jeweils spezifisch geeigneten Werkstoffen hergestellt werden, so dass auch die Lebensdauer der Abgas führenden Bauteile verlängert wird. Außerdem kann hiermit ein geringeres Gewicht der Abgasanlage erzielt werden.

Gemäß den Merkmalen des Patentanspruchs 2 ist das Innenrohr im Eintrittsbereich des Abgases über in der Wand des Innenrohrs vorgesehene Durchtrittsöffnungen mit dem inneren Ringspalt Abgas überleitend verbunden.

Um die unterschiedlichen Ausdehnungen der diversen Bauteile der Abgasanlage, die durch unterschiedliche Temperaturen hervorgerufen werden, zu kompensieren, ist nach Patentanspruch 3 mindestens das Innenrohr am motorfemen Ende relativ beweglich angeordnet. Dies kann z.B. durch einen Schiebesitz verwirklicht werden. Vorzugsweise wird das motomahe Ende verschweißt.

Um das Kühlmittel im äußeren Ringspalt stets wieder einwandfrei rückzukühlen, ist nach Patentanspruch 4 vorgesehen, dass der äußere Ringspalt an eine das Kühlmittel rückkühlende Kühleinheit angeschlossen ist.

In diesem Zusammenhang ist es entsprechend den Merkmalen des Patentanspruchs 5 von Vorteil, wenn die Kühleinheit einen Wärmeaustauscher und eine Umwälzpumpe aufweist. Der Wärmeaustauscher kann als Luft/Kühlmittel-Tauscher ausgebildet sein.

Die Rohre werden bevorzugt mittels der Innenhochdrucktechnik umgeformt. Dadurch sind auch nicht runde Querschnitte sowie Ausprägungen für Freigänge bei kleineren Fertigungstoleranzen realisierbar.

Die Erfindung ist nachfolgend anhand eines in den Zeichnungen dargestellten Ausführungsbeispiels näher erläutert. Es zeigen:
- Figur 1: im vertikalen schematischen Längsschnitt einen Verbrennungsmotor mit einer Abgasanlage und
- Figur 2: in vergrößerter perspektivischer Darstellung den Ausschnitt II der Figur 1.

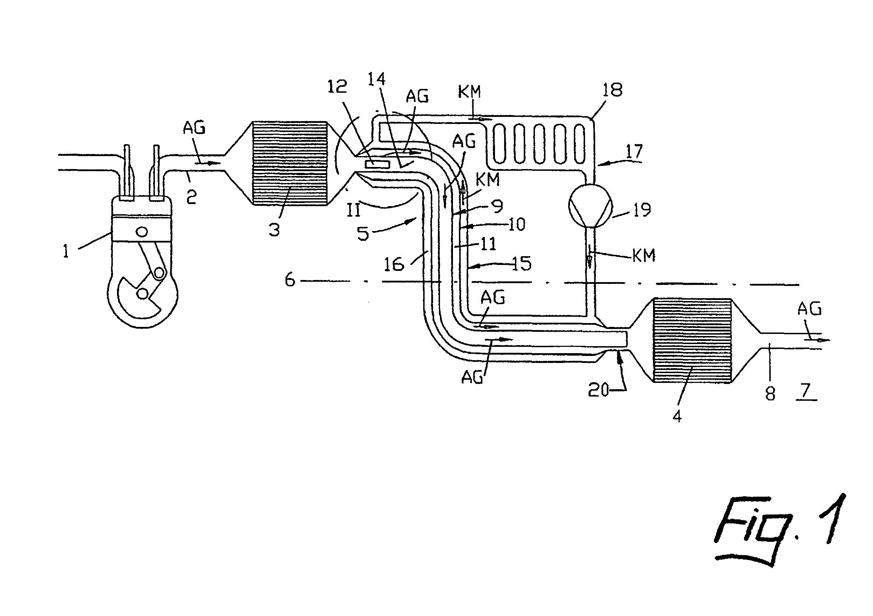

Mit 1 ist in der Figur 1 ein schematisch dargestellter Verbrennungsmotor in Form eines direkt einspritzenden Ottomotors bezeichnet.

Das den Verbrennungsmotor 1 verlassende Abgas AG gelangt zunächst über einen Krümmer 2 in einen Drei-Wege-Katalysator 3. Der Drei-Wege-Katalysator 3 ist mit einem NOₓ-Adsorber 4 über ein Mehrkanalsystem 5 gekoppelt. Der NOₓ-Adsorber 4 befindet sich unterhalb des Bodens 6 des nicht näher veranschaulichten Kraftfahrzeugs kurz vor dem die Abgase AG in die Umgebung 7 überführenden Auspuffrohr 8.

Das Mehrkanalsystem 5 umfasst zunächst ein Innenrohr 9 als direkte Verbindung zwischen dem Drei-Wege-Katalysator 3 und dem NOₓ-Adsorber 4. Das Innenrohr 9 ist von einem Trennrohr 10 umgeben, wodurch zwischen dem Trennrohr 10 und dem Innenrohr 9 ein innerer Ringspalt 11 gebildet wird.

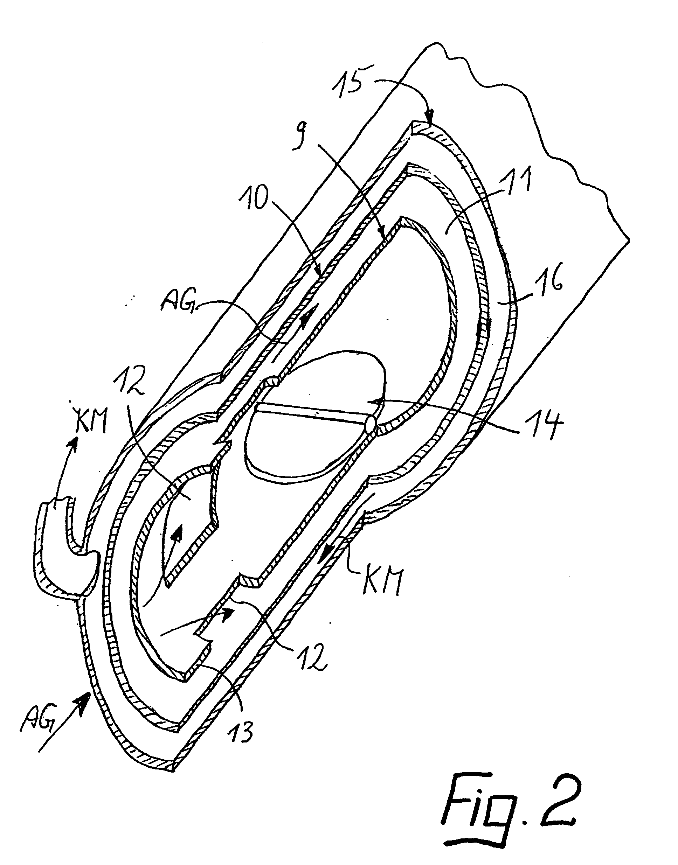

Wie insbesondere die Figur 2 erkennen lässt, sind im Eintrittsbereich des Abgases AG in das Innenrohr 9 Durchtrittsöffnungen 12 in der Wand 13 des Innenrohrs 9 vorgesehen, so dass das Abgas AG auch in den inneren Ringspalt 11 gelangen und über diesen zum NOₓ-Adsorber 4 strömen kann. In Strömungsrichtung des Abgases AG hinter den Durchtrittsöffnungen 12 ist in das Innenrohr 9 ein Sperrorgan 14 in Form einer Schaltklappe integriert. Hiermit kann der Strömungsquerschnitt des Innenrohrs 9 komplett versperrt werden.

Umfangsseitig des Trennrohrs 10 befindet sich ein Mantelrohr 15. Durch das Mantelrohr 15 und das Trennrohr 10 wird ein äußerer Ringspalt 16 geschaffen, in dem ein Kühlmittel KM strömt. Die Figur 1 zeigt, dass der äußere Ringspalt 16 an eine Kühleinheit 17 angeschlossen ist, welche einen Luft/Kühlmittel-Wärmeaustauscher 18 und eine Umwälzpumpe 19 für das Kühlmittel umfasst.

Das Ende 20 des des Innenrohrs 9 ist zum Trennrohr 10 und zum Mantelrohr 15 relativ beweglich angeordnet, um eine Kompensation der unterschiedlichen Ausdehnungen der diversen Bauteile 9, 10, 15, die durch unterschiedliche Temperaturen hervorgerufen werden, zu ermöglichen. Dazu können Schiebesitze an den Enden 20 ausgebildet sein. Insbesondere können hierbei das Trennrohr 10 und das Innenrohr 9 im äußeren Mantelrohr 15 Relativbewegungen ausführen und somit die thermisch induzierten Spannungen abbauen.

Beim Kaltstart des Verbrennungsmotors 1 wird das Sperrorgan 14 auf Durchströmung gestellt, so dass das Abgas AG sowohl durch das Innenrohr 9 als auch durch den inneren Ringspalt 11 zum NOₓ-Adsorber 4 strömen kann. Da die Wanddicke des Innenrohrs 9 bewusst so gering wie nur möglich gehalten ist, wird dem Abgas AG nur wenig Wärme entzogen, so dass der NOₓ-Adsorber 4 schnellstmöglich mit der Umsetzung von NOₓ beginnen kann.

Ist die maximale Temperatur des Abgases AG vor dem NOₓ-Adsorber 4 erreicht, wird durch Verschwenken des Sperrorgans 14 das Innenrohr 9 versperrt. Jetzt strömt das Abgas AG nur noch durch den inneren Ringspalt 11 zwischen dem Innenrohr 9 und dem Trennrohr 10 zum NOₓ-Adsorber 4. Bei diesem Strömungsweg steht es unter dem Einfluss des im äußeren Ringspalt 16 strömenden Kühlmittels KM, so dass das Abgas AG wirkungsvoll auf die für den NOₓ-Adsorber 4 notwendige Temperatur abgekühlt wird. Das Verschwenken kann z.B. mittels einer Unterdruckdose oder gesteuert vom Abgas unter Anwendung des Bimetallprinzips erfolgen. Eine elektromechanische Betätigung ist ebenfalls denkbar.

### Bezugszeichenaufstellung

- 1 -: Verbrennungsmotor
- 2 -: Krümmer
- 3 -: Drei-Wege-Katalysator
- 4 -: NOₓ-Adsorber
- 5 -: Mehrkanalsystem
- 6 -: Boden
- 7 -: Umgebung
- 8 -: Auspuffrohr
- 9 -: Innenrohr
- 10 -: Trennrohr
- 11 -: innerer Ringspalt
- 12 -: Durchtrittsöffnungen
- 13 -: Wand v. 9
- 14 -: Sperrorgan in 9
- 15 -: Mantelrohr
- 16 -: äußerer Ringspalt
- 17 -: Kühleinheit
- 18 -: Wärmeaustauscher
- 19 -: Umwälzpumpe
- 20 -: Ende v. 9

- AG -: Abgas
- KM -: Kühlmittel

## Patentansprüche

1. Abgasanlage eines Kraftfahrzeugs zwischen einem Abgas (AG) erzeugenden Verbrennungsmotor (1) und einem Abgas (AG) in die Umgebung (7) überleitenden Auspuffrohr (8), welche zwischen einem motomahen Drei-Wege-Katalysator (3) und einem vor dem Auspuffrohr (8) angeordneten NOₓ-Adsorber (4) ein Abgas (AG) weiter leitendes, mit einem Sperrorgan (14) versehenes Innenrohr (9) und ein das Innenrohr (9) mit Abstand umgebendes tragendes Mantelrohr (15) aufweist, wobei zwischen dem Innenrohr (9) und dem Mantelrohr (15) Abgas (AG) bypassartig entlang geleitet wird sowie ein Kühlmittel (KM) führender Ringspalt (16) vorgesehen ist, **dadurch gekennzeichnet, dass** durch ein Trennrohr (10) zwischen dem Innenrohr (9) und dem Mantelrohr (15) ein das Abgas (AG) leitender innerer Ringspalt (11) zwischen dem Innenrohr (9) und dem Trennrohr (10) sowie der das Kühlmittel (KM) führende äußere Ringspalt (16) zwischen dem Trennrohr (10) und dem Mantelrohr (15) gebildet sind.

2. Abgasanlage nach Patentanspruch 1, **dadurch gekennzeichnet, dass** das Innenrohr (9) im Eintrittsbereich des Abgases (AG) über in der Wand (13) des Innenrohrs (9) vorgesehene Durchtrittsöffnungen (12) mit dem inneren Ringspalt (11) Abgas (AG) überleitend verbunden ist.

3. Abgasanlage nach Patentanspruch 1 oder 2, **dadurch gekennzeichnet, dass** mindestens das Innenrohr (9) am motorfemen Ende (20) relativbeweglich angeordnet ist.

4. Abgasanlage nach einem der Patentansprüche 1 bis 3, **dadurch gekennzeichnet, dass** der äußere Ringspalt (16) an eine das Kühlmittel (KM) rückkühlende Kühleinheit (17) angeschlossen ist.

5. Abgasanlage nach Patentanspruch 4, **dadurch gekennzeichnet, dass** die Kühleinheit (17) einen Wärmeaustauscher (18) und eine Umwälzpumpe (19) aufweist.

## Claims

1. A motor vehicle exhaust gas installation between an internal combustion engine (1) producing an exhaust gas (AG) and an exhaust pipe (8) transferring the exhaust gas (AG) into the surroundings (7), said installation comprising, between a three-way catalyst (3) adjacent the engine and a NOₓ-adsorber (4) disposed in front of the exhaust pipe (8), an inner tube (9) conveying exhaust gas (AG) onwards and provided with a shut-off member (14), and a jacket tube (15) surrounding the inner tube (9) in spaced relationship, exhaust gas (AG) being guided bypass fashion along, and an annular gap (16) carrying coolant (KM) being provided, between the inner tube (9) and the jacket tube (15), **characterised in that** there are formed by a separating tube (10) between the inner tube (9) and the jacket tube (15) an inner annular gap (11) carrying the exhaust gas (AG) between the inner tube (9) and the separating tube (10) as well as the outer annular gap (16) carrying the coolant (KM) between the separating tube (10) and the jacket tube (15).

2. An exhaust gas installation according to claim 1, **characterised in that** in the entry zone of the exhaust gas (AG) the inner tube (9) is connected, via apertures (12) provided in the wall (13) of the inner tube (9), to the inner annular gap (11) so as to transfer exhaust gas (AG).

3. An exhaust gas installation according to claim 1 or 2, **characterised in that** at least the inner tube (9) is disposed to be relatively movable at the end (20) remote from the engine.

4. An exhaust gas installation according to any one of claims 1 to 3, **characterised in that** the outer annular gap (16) is connected to a cooling unit (17) which re-cools the coolant (KM).

5. An exhaust gas installation according to claim 4, **characterised in that** the cooling unit (17) comprises a heat exchanger (18) and a circulating pump (19).

## Revendications

1. Dispositif d'échappement des gaz d'un véhicule automobile entre un moteur à combustion interne (1) produisant des gaz d'échappement (AG) et un tuyau d'échappement (8) transférant les gaz d'échappement (AG) dans l'environnement (7), qui présente, entre un catalyseur à trois voies (3) à proximité du moteur et un adsorbeur de NOₓ (4) disposé en amont du tuyau d'échappement (8), un tuyau intérieur (9) continuant à guider les gaz d'échappement et muni d'un organe de fermeture (14) et un tuyau d'enveloppe (15) entourant à distance et supportant le tuyau intérieur (9), les gaz d'échappement (AG) étant guidés en dérivation entre le tuyau intérieur (9) et le tuyau d'enveloppe (15) et un espace annulaire (16) étant prévu pour guider un réfrigérant (KM),
**caractérisé en ce que**, par le biais d'un tuyau de séparation (10) entre le tuyau intérieur (9) et le tuyau d'enveloppe (15), il est formé un espace annulaire intérieur (11) guidant les gaz d'échappement (AG) entre le tuyau intérieur (9) et le tuyau de séparation (10) ainsi que l'espace annulaire extérieur (16) guidant le réfrigérant (KM) entre le tuyau de séparation (10) et le tuyau d'enveloppe (15).

2. Dispositif d'échappement des gaz selon la revendication 1, **caractérisé en ce que** le tuyau intérieur (9), dans la zone d'entrée des gaz d'échappement (AG) par des ouvertures de passage (12) prévues dans la paroi (13) du tuyau intérieur (9), est raccordé avec l'espace annulaire intérieur (11) pour transférer les gaz d'échappement (AG).

3. Dispositif d'échappement des gaz selon la revendication 1 ou 2, **caractérisé en ce qu'**au moins le tuyau intérieur (9) est disposé sur l'extrémité éloignée du moteur (20) de façon relativement mobile.

4. Dispositif d'échappement des gaz selon les revendications 1 à 3, **caractérisé en ce que** l'espace annulaire extérieur (16) est raccordé à une unité de refroidissement (17) servant à refroidir à nouveau le réfrigérant (KM).

5. Dispositif d'échappement des gaz selon la revendication 4, **caractérisé en ce que** l'unité de refroidissement (17) présente un échangeur de chaleur (18) et une pompe de circulation (19).
